# EUROPEAN PATENT SPECIFICATION

(11) **EP 0 568 582 B1**
(45) Date of publication and mention of the grant of the patent: **08.11.1995**
(21) Application number: 92903530.1
(22) Date of filing: 21.01.1992
(51) Int. Cl.: F02B 33/00

(54) **ARRANGEMENT FOR SUPERCHARGING OF AUTOMOBILE ENGINES**
ANORDNUNG ZUR AUFLADUNG EINES FAHRZEUGMOTORS
DISPOSITIF DE SURALIMENTATION DE MOTEURS D'AUTOMOBILES

(30) Priority: 21.01.1991 SE 9100169
(43) Date of publication of application: 10.11.1993
(73) Proprietor: EDSTROEM CONSULTING AB, S-752 26 Uppsala (SE)
(72) Inventor: EDSTRÖM, Sören, S-752 26 Uppsala (SE); EDSTRÖM, Johan, S-752 26 Uppsala (SE)
(74) Representative: Waldinger, Ake
(86) International application number: SE9200036
(87) International publication number: WO9213182

(56) References cited:
- DE-A- 2 714 318
- US-A- 4 589 396
- US-A- 4 667 646

## Description

### FIELD OF THE INVENTION

This invention relates to a system for efficient and flexible operation of an internal combustion engine of the Otto type, comprising a supercharging device including a drive train and a clutch for mechanically driving from the engine a positive displacement type supercharger, a dual fuel system and a control system.

### BACKGROUND OF THE INVENTION

As a sofisticated lifestyle is becoming more common, the demands on efficiency are rising. The efficiency of a process is generally understood as the ratio between what is gained to what is sacrificed. The process of moving people from one place to another is a process of great importance. The efficiency of this process when automobiles are utilized is, unfortunately, very low. To be able to accomplish the primary task of transporting a suitable number of people a certain distance with today's standards for comfort and speed, much has to be sacrificed in terms of natural resources and clean environment; also human suffering from accidents caused by inadequate machinery should be remembered in the count of efficiency-lowering factors.

When people are transported by means of automobiles, on a level road, with a constant speed, the power needed for the propulsion is relatively low. The time spent during this basic mode of operation is much longer than the time spent for acceleration, thus the maximum power of the engine is used very seldom, typically less than 2% of the total time. The high power region must, however, be available for the car to be safe in today's traffic. A typical case is the acceleration up to speed when entering a highway with heavy traffic, or the passing of other vehicles. For that reason most cars are equipped with rather large and heavy engines, which in turn means that the whole car is larger and heavier than if an engine for the basic transportation mode had been used. More material and energy is needed for the construction of the car, more fuel is needed for the operation of it - and the negative impact on the environment is greater.

The power exerted by an engine is dependent on its size, the so-called effective mean pressure in the working chambers and the frequency of the power pulses. To obtain high power output from a small engine that last factor must be high. The acceleration of a wheeled vehicle is, however, dependent on the propulsive force exerted by the driving wheels against the ground. To be able to utilize the greater power of a high speed engine for acceleration from a cruising mode, the ratio between the speed of the engine and the speed of the wheels must be increased, i.e. a "shift down" has to take place. This is a time-consuming and somewhat awkward procedure which is not satisfactory in a critical situation. Furthermore, an engine designed to operate at high speeds is complicated and expensive, at the same time as efficiency, flexibility and longevity are suffering from such a layout.

An alternative way to obtain an increase in the propulsive force is to increase the effective mean pressure in the engine. This is most commonly accomplished by means of so-called "supercharging" - forcing the engine to take in more air than it can do in its naturally aspirated state. Normally some type of compressor is used in the inlet duct to increase the density of the air to the engine, whereby a larger amount of fuel can be combusted.

A negative effect of the supercharging is, however, that the precompressed mixture of fuel and air has a higher tendency for "knock", or "detonation", i.e. a very sudden pressure increase caused by spontaneous ignition. In order to avoid detonation in the supercharged mode without having to change fuel, one normally has to permanently lower the compression ratio in the engine as well as retard the ignition, as compared to an engine set up for operation in the naturally aspirated mode only. Both these measures will lower the efficiency of the engine. If one would like to retain the original, advantageous values of compression ratio and point of ignition, then a fuel with a much higher octane number would have to be used to begin with. Such "superfuels" for basic needs are not readily available and are hard to justify.

Another, unwanted effect of the supercharging is increased thermal stresses in the engine, especially if an economical "lean" mixture is used, i.e. minimum amount of fuel in the air. Just in order to avoid overheating and detonation, many supercharged engines are running too "rich", i.e. more fuel than necessary for complete combustion is used, something that is very detrimental for the fuel economy and the environment. (It is understood, that so-called "catalytic after-burners" can be employed to lower the obnoxious exhaust emissions, but that fact does not influence the basic thrust of this invention.) Injection of water will lower the temperature, but such a system is not a very practical proposition for a small automobile engine. It has also been suggested, e.g. in the German Offenlegungsschrift 27 14 318, that the mixing of gasoline and methanol in the same carburator could be a way to decrease the risks of detonation and overheating. A system using that as the only power-rising factor would not, however, make the power increase large enough to be of interest in this particular case.

For the creation of the pressurized air so-called "turbochargers" have come to extensive use. A turbocharger is a dynamic type of machine, where a power turbine is extracting energy from the exhaust gases for driving a compressor. All automobile engines are, of course, of the positive displacement type and the mixing of machines of dynamic and positive displacement type is generally not good engineering practice. In this particular case the main disadvantage of this "mis-match" is the fact that at low engine speeds and at low mean pressure levels, there is not enough energy present in the exhaust gases to accelerate the compressor quickly to the speed where it can give the desired boost pressure. This phenomenon has been called "turbo lag" and it means that the desired extra torque is not available when called for. It can be stated that the turbo lag, together with the aforementioned disadvantages of lower fuel economy at part load and higher thermal stresses make the turbocharger unsuitable for the optimized means of personnel transportation that is the object of this invention.

Well known in the art of supercharging are the so-called "mechanical superchargers". These are mechanically driven compressors of some sort, predominantly working according to the positive displacement principle, like the Roots, rotary vane, scroll or screw types. The main advantage of having two positive displacement machines coupled together in this manner is, that the boost pressure available is practically independent of the engine speed. If the compressor is permanently coupled to the engine, e.g. by means of V-belts or the like, the "throttle response" will be very good, in the sense that an opening of the throttle will result in an almost immediate increase in torque. However, during most of the operating time there is no need for the compressor, which still absorbs a considerable amount of energy also when running idle, and this is a fact that will make this arrangement unsuitable when fuel economy is one of the main concerns.

It has been suggested, e.g in U.S. Pat. No. 4 667 646, to arrange for energy recovery when the engine is operated with a throttled inlet by means of a special expansion device, which will feed power back to the engine in that mode. When supercharging is called for, appropriate valving makes it possible to operate the same machine as a compressor. Although elegant in theory, this principle has not been reduced to practice due to the difficulty in arriving at a simple, reliable and cost effective design.

For best fuel economy and longest life of the compressor, it appears to be obvious, that the compressor should only be coupled to the engine when there really is a need for supercharging, and closest at hand would be to try to use some kind of electromagnetic clutch. Such designs have been suggested, e.g. in Japanese Pat. No. 57-183523 (A) and U.S. Pat. No. 4,589,396. A typical electromagnetic clutch is not, however, designed for this type of application. Being of the dry type, the conditions for heat dissipation as well as wear resistence are poor. When used as intended here, this will lead to overheating and wear. It normally also has too high polar mass moment of inertia to allow a quick engagement.

A typical way to operate an engine with a de-clutchable supercharger is to use the power resources of the naturally aspirated engine as far as possible and thereafter engage the supercharger to obtain the "extra" power. In such a case. however, the energy required to bring the compressor up to speed has to be taken from the flywheel of the engine, which means a deceleration instead of the desired acceleration. A very elaborate system to overcome that problem is described in the Japanese patent No. 58-41224 (A), where the supercharger is driven through an electromagnetic clutch and a "variator" - a drive arrangement where the speed ratio can be varied steplessly. In addition to this, a separate intake system with separate inlet valves is provided. Taken all together this gives a very complicated, vulnerable and expensive system.

The components of a current mechanical supercharger system are typically arranged in an "add on" fashion. A self-contained supercharger is added to an existing engine and a suitable place has to be found for it so that a more or less direct drive by means of v-belts from the crankshaft of the engine can be arranged. this type of drive has several disadvantages: slip, wear, need for adjustments, sensitivity to dirt, etc. The supercharger has to contain a lubrication system of its own, which calls for frequent checks and associated service. In addition to these disadvantages, a compressor mounted "in the open" is prone to generate a disturbing amount of noise.

To summarize the prior art it can be said that many schemes are in use and have been suggested to obtain a temporary power level that is higher than what the basic engine can deliver, but all these schemes have resulted in a lower efficiency of the power unit when operated in the basic, non-supercharged mode, where most of the time is spent. Further more the transition from the low to the high power lever has either required a considerable time, or made use of complicated and unrealiable machinery. Thus all prior art solutions have been unsatisfactory.

### SUMMARY OF THE INVENTION

The present invention is addressing the need for a better powerplant for the propulsion of vehicles - something that is light, compact and reliable, and which provides good fuel economy at lower power levels together with the availability of a substantial amount of "extra" power when needed, while maintaining good exhaust emission qualities under all operating conditions.

This has been achieved, according to the invention, in the use of the engine being designed for best efficiency when partially throttled, naturally aspirated and operating on a primary fuel of predominantly mineral oil type, a secondary fuel system employing a second fuel tank containing a fuel of predominantly organic type with a higher octane number and a higher latent heat of vaporization than said primary fuel, a foot-operated pedal and an electronic control system, designed such, that upon signal from said foot-operated pedal, said secondary fuel is fed to said engine in a quantity adequate to prevent detonation without lowering the settings of said engine with respect to compression ratio or ignition point, and said clutch is activated to bring said supercharger in synchronization with said engine, in addition to which said foot-operated pedal has a first and a second operating range, with a substantially higher force needed for operation in said second range, said second range corresponding to a torque output from said engine when naturally aspirated and fed said secondary fuel, that is substantially higher than the torque available from said engine when operated in said first range, the difference between said second range torque and said first range torque being used for the angular acceleration of said supercharging device.
According to a suitable embodiment of the invention, said supercharging device is designed as an integrated, but removable part of said engine and being lubricated by the circulating oil in said engine.

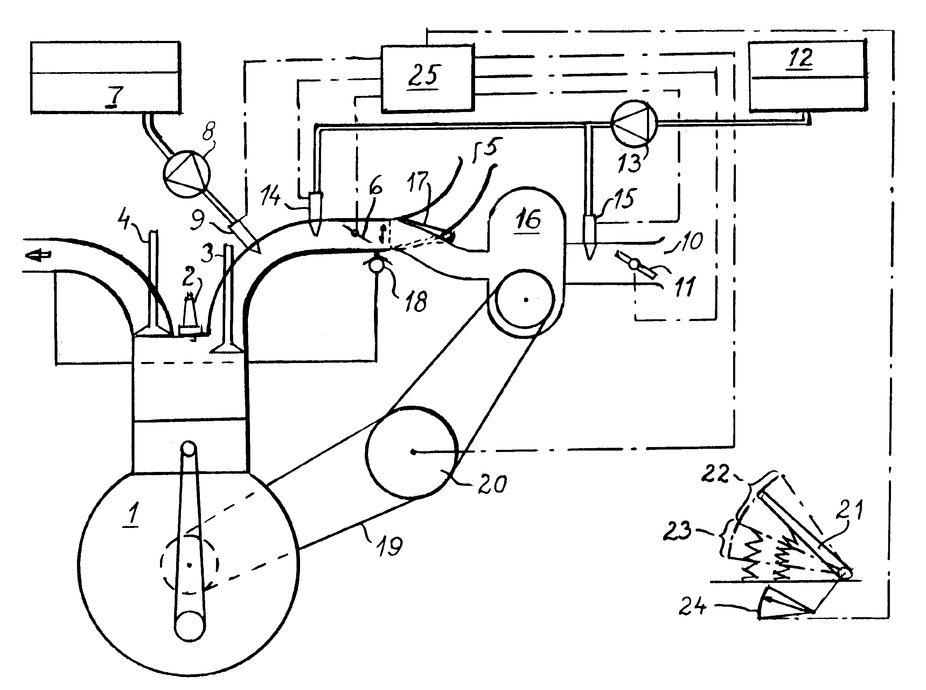

### BRIEF DESCRIPTION OF THE DRAWING

The drawing discloses a schematic block diagram of a preferred embodiment of the supercharging system with a typical Otto type engine, a positive type of compressor, a drive train with a clutch, a dual-fuel injection system and an electronic control system.

### DESCRIPTION OF THE PREFERRED EMBODIMENT

Referring to the drawing, the components and the function of the invention will be explained in the following. The new system is conceived to work with an internal combustion engine (1) of the well known Otto type, where the mixture of fuel and air is ignited by means of a spark from a spark plug (2). The combustible mixture enters the cylinder through the inlet valve (3) during the inlet stroke and the gas produced by the combustion is expelled through the exhaust valve (4) during the discharge stroke. It is understood, that although the figure shows only one cylinder, the most likely case is that the engine has several cylinders. This engine is designed, according to well known principles, for the best possible efficiency to be obtained in the speed and load region where it is predominantly used, i.e. somewhere in the middle of the operating range, when it is operating in its naturally aspirated mode and with a predominantly mineral oil based fuel.

The intake system is comprised of two main parts: the primary system, including the primary inlet duct (5), a first throttling valve (6), a first fuel system with a first fuel tank (7), a first fuel pump (8), the primary fuel injectors (9) near the inlet valves - and the secondary system, including the secondary inlet duct (10), a second throttling valve (11), a second fuel system with a second fuel tank (12), a second fuel pump (13), the second fuel injectors (14) in the primary inlet duct and a third injector (15) in the secondary inlet duct, and a positive displacement type compressor (16), preferably of the so-called twin-screw type, with suitable proportions. For the proper function of the inlet system, also other valves can be considered, e.g. an automatic two-way valve (17) and a pressure relief valve (18).

The compressor is preferably driven by a positive type of mechanical drive system (19), i.e. non-slipping. The clutch (20) is preferably of the multi-disk type, operating in oil for good wear characteristics and efficient heat dissipation. The slip torque of this clutch is adjustable. A servo mechanism, well known for those skilled in the art, is also envisioned to operate this clutch upon a signal from the control system. Due to the viscous drag in this type of clutch, there will be a slight torque transmitted also in the de-clutched state, resulting in a slow rotation of the compressor when it is idle. This is advantageous for the life of the compressor in many ways: there will be no risks for bearing-destroying static vibrations or a dried out shaft seal. If a hot compressor is left to cool down in a completely static condition, there is also a risk that the rotors will be deformed due to the uneven cooling, a condition that can cause trouble when the compressor is restarted.

For the control of the mean pressure in the engine, there is a control system employed, consisting of a foot-operated pedal (21), with its first operating range (22), its second operating range (23) and the position sensor (24). The force needed to operate the foot pedal in the second operating range is at a considerably higher level than in the first operating range. The control system further incorporates a micro computer (25), which is receiving signals from the engine and its auxilliaries as required for the calculation of optimum settings of the valves that control the torque from the engine and the combustion of the fuel. It also controls the engagement of the supercharger. Such devices are well known for those skilled in the art and are not a part of this invention. The control signals that are most interesting in this context are the signals to the mechanical clutch (20), to the injectors (9) of the first fuel system, to the injectors (14) and (15) of the second fuel system, to the throttle valve (6) in the primary system and to the throttling valve (11) in the secondary system.

Further benefits are realized if the supercharging device is made as an integrated part of the engine. The complete drive system can then be contained inside the envelope of the engine proper. Normally it is necessary to operate the compressor at a higher rotational speed than that of the engine, and in this case suitable step-up gears driving the input part of the clutch can easily be arranged as part of the internals of the engine. With this arrangement it is only the secondary part of the clutch and the compressor - parts with a comparatively low moment of inertia - that have to be brought up to speed when supercharging is called for. The whole drive train, including the compressor, is lubricated by the same, cooled and filtrated oil as is circulating in the rest of the engine. The arrangement of very sturdy drive elements, good lubrication and cooling by this oil combined with the low moment of inertia of the parts involved, makes it possible to obtain very short clutching periods. When the engine is laid out, the best place for the compressor should be determined, with respect to drive system as well as flow path. The design of the compressor should make it an integrated part of the engine in function and appearance, but in order to facilitate the manufacture as well as service, the compressor is preferably designed as a removable part.

The significance of this novel system may be appreciated from the following description of a typical case:

For all "normal" operation of the vehicle, i.e. when there is a moderate need for torque to the drive wheels, the foot pedal is used only in its first operating range (22), where the engine can operate solely in its naturally aspirated mode and on its primary fuel, being predominantly of the mineral oil type, typically unleaded gasoline. The throttle valve (6) is not allowed to be opened more than to approximately two thirds during this mode. The compression ratio in an engine designed for partly throttled operation can be raised considerably before the "detonation limit" is reached, especially when compared to an engine set up for operation on gasoline in the supercharged mode. It is also possible to run the engine very "lean" in this mode and to use the optimum ignition setting. Thus, when practicing this invention, the efficiency of the engine will be extremely good during most of the time it is operated.

If maximum acceleration is desired, the driver will press the foot pedal (21) "to the floor". The position sensor (24) will then instruct the micro computer (25) to arrange for the quickest possible compressor start-up. The throttle valve (6) is opened fully at the same time as a secondary fuel of predominantly organic nature, typically aethanol or methanol or mixtures containing an alcohol with a higher octane number than the primary fuel, is injected through the injector (14). The ratio between the amount of primary and secondary fuel is given by the requirement that detonation must be avoided. It should be appreciated that by this novel arrangement a considerable amount of "extra" torque is released, which can be used for a rapid engagement of the compressor. It is understood, that for a quick and safe compressor acceleration phase, the drive train to the compressor must be very robust and the polar mass moment of inertia of the rotating elements must be as low as possible. Already with the present state of the art it is quite feasible to arrive at satisfactory designs for those elements, and further developments are foreseeable. The fact that the engine normally is working with a comparatively low rotational speed when the compressor is engaged, will further improve the conditions for a short and safe start-up period of the compressor. As soon as the increased torque is made available, the clutch (20) is engaged and the second throttle valve (11) is opened. Immediately thereafter, the third injector (15) is beginning to inject some of the secondary fuel ahead of the compressor (16). As the slip in the clutch is decreasing, the boost pressure will increase, the two-way valve (17) will open and more of the secondary fuel will be injected through the third injector (15). The start-up sequence discribed here takes typically only a few tenths of a second.

During the time the engine is working in the second mode, the ratio between the amount of primary and secondary fuel is constantly monitored, so that detonation is avoided. Thus it is foreseen that the total amount of the primary fuel might have to be reduced under certain conditions. It should also be appreciated, that the secondary fuel, being basically an alcohol, is a more "clean-burning" fuel than the primary fuel, being basically a sort of gasoline, having the effect that the exhaust emissions will be less harmful when the engine is operated in the supercharged mode than when working in the basic mode. With this secondary fuel available, a similar arrangement to avoid detonation also in the first operational mode could sometimes be justified, e.g. in the case of a sudden increase in torque requirement at a low engine speed.

Although it is well known, that the injection of a fuel with a high latent heat of vaporization, like an alcohol, ahead of a mechanical supercharger has several beneficial effects, typically more efficient compression, more reliable operation of the compressor and giving a cooler charge, it has not up till now been used outside the realm of racing. It is only when incorporated into a complete system, as in the case of the present invention, that this becomes a practical proposition. It is also foreseen, that a small amount of oil of a kind that is harmless to the environment can be mixed with the secondary fuel, which will further improve the efficiency and reliabilty of the compressor. These factors, taken together with the fact that the compressor will be used only during a very limited time, will make a system, built in accordance with the present invention, very suitable for basic transportation with many hours of operation per year. It has the added advantage, that the driver can to a larger extent than hitherto influence the operating costs through his driving pattern.

It is also foreseen that some "anti-hunting means" should be incorporated, as a situation can arise when the driver has to reduce the power temporarily when running in the supercharged mode, e.g. when maneuvering into a "slot" in a fast moving line of cars on a highway. In such a case the first throttle valve (6) and the second throttle valve (11) will work together, at the same time as the injection of the secondary fuel is stopped. The two throttle valves should be programmed to ensure that an unduly high pressure is not created after the compressor, but for the sake of safety, a relief valve (18) should be incorporated in the system. Thus the "extra" torque is immediately available as soon as needed, for a period of time that can be predetermined.

## Claims

1. A system for efficient and flexible operation of an internal combustion engine (1) of the Otto type, comprising a supercharging device including a drive train (19) and a clutch (20) for mechanically driving from said engine (1) a positive displacement type supercharger (16), a dual fuel system (7,8,12,13) and a control system (6,9,11,14,15,17, 24,25), CHARACTERIZED by the engine being designed for best efficiency when partially throttled, naturally aspirated and operating on a primary fuel of predominantly mineral oil type, a secondary fuel system employing a second fuel tank (12) containing a fuel of predominantly organic type with a higher octane number and higher latent heat of vaporization than said primary fuel, a foot-operated pedal (21) and an electronic control system (25), designed such, that upon signal from said foot-operated pedal (21), said secondary fuel is fed to said engine (1) in a quantity adequate to prevent detonation without lowering the settings of said engine (1) with respect to compression ratio or ignition point, and said clutch (20) is activated to bring said supercharger (16) in synchronization with said engine (1), in addition to which said foot-operated pedal (21) has a first and a second operating range (22,23), with a substantially higher force needed for operation in said second range (23), said second range corresponding to a torque output from said engine (1) when naturally aspirated and fed said secondary fuel, that is substantially higher than the torque available from said engine (1) when operated in said first range (22), the difference between said second range torque and said first range torque being used for the angular acceleration of said supercharging device (16,19,20).

2. The system as claimed in claim 1, wherein said supercharging device (16,19,20) is designed as an integrated, but removable part of said engine (1) and being lubricated by the circulating oil in said engine (1).

## Patentansprüche

1. System zum effizienten und vielseitigen Betreiben einer Verbrennungskraftmaschine (1) nach dem Ottoprinzip mit einer Aufladevorrichtung, die einen Antriebsmechanismus (19) und eine Kupplung (20) zum Antreiben eines Laders (16) der Verdrängerbauart durch die Maschine, ein doppeltes Kraftstoffsystem (7, 8, 12, 13) und ein Steuerungssystem (6, 9, 11, 14, 15, 17, 24, 25) aufweist, **dadurch gekennzeichnet**, daß die Maschine für einen optimalen Wirkungsgrad ausgelegt ist, wenn sie teilweise gedrosselt und selbstansaugend und mit einem primären Kraftstoff überwiegend auf Mineralölbasis arbeitet, ein sekundäres Kraftstoffsystem einen zweiten Kraftstoffbehälter (12) verwendet, der einen Kraftstoff überwiegend organischer Art mit einer höheren Oktanzahl und einer höheren latenten Verdunstungswärme als der primäre Kraftstoff enthält, und ein fußbetätigtes Pedal (21) und ein elektronisches Steuerungssystem (25) so ausgelegt sind, daß auf ein Signal von dem fußbetätigten Pedal hin der sekundäre Kraftstoff der Maschine (1) in einer angemessenen Menge zugeführt wird, um ein Klopfen ohne ein Herabsetzen der Einstellungen des Verdichtungsverhältnisses oder des Zündzeitpunktes zu verhindern, und die Kupplung (20) eingerückt wird, um den Lader (16) in Gleichlauf mit der Maschine (1) zu bringen und weiterhin das fußbetätigte Pedal (21) einen ersten und einen zweiten Betriebsbereich (22, 23) besitzt, wobei für die Betätigung im zweiten Bereich eine wesentlich höhere Kraft notwendig ist und zu diesem zweiten Bereich, wenn die Maschine (1) selbstansaugend ist und mit sekundärem Kraftstoff versorgt wird, eine Drehmomentabgabe der Maschine gehört, welche wesentlich höher ist als das abgegebene Drehmoment der Maschine (1), wenn diese im ersten Bereich betrieben wird, wobei der Unterschied zwischen dem Drehmoment des zweiten Bereichs und dem Drehmoment des ersten Bereichs für die Winkelbeschleunigung der Aufladevorrichtung (16, 19, 20) verwendet wird.

2. System nach Anspruch 1, **dadurch gekennzeichnet**, daß die Aufladevorrichtung (16, 19, 20) als ein integrierter, jedoch entfernbarer Teil der Maschine (1) ausgebildet ist und von dem in der Maschine (1) zirkulierenden Öl geschmiert wird.

## Revendications

1. Un système de fonctionnement efficace et souple d'un moteur à combustion interne (1) de type Otto, comportant un dispositif de suralimentation, comprenant une transmission d'entraînement (19) et un embrayage (20) pour entraîner mécaniquement à partir dudit moteur (1) un surcompresseur de type volumétrique (16), un système à double alimentation de carburant (7, 8, 12, 13) et un système de commande (6, 9, 11, 14, 15, 17, 24, 25) caractérisé en ce que le moteur est agencé pour donner son meilleur rendement lorsqu'il est partiellement étranglé, en admission naturelle, et fonctionne avec un carburant primaire essentiellement de type pétrolier, un système de carburant secondaire employant un second réservoir de carburant (12) contenant un carburant essentiellement de type organique à indice d'octane supérieur et à chaleur latente de vaporisation supérieure à celle dudit carburant primaire, une pédale d'accélérateur (21) et un système de commande électronique (25), agencés de manière que, lors d'un signal venant de ladite pédale d'accélérateur (21) ledit carburant secondaire est alimenté vers ledit moteur (1) en quantité adéquate pour empêcher l'explosion sans abaisser les réglages dudit moteur (1) sur le plan du rapport de compression ou du point d'allumage, et ledit embrayage (20) est actionné pour amener ledit surcompresseur (16) en synchronisme avec ledit moteur (1); en supplément à cela, ladite pédale d'accélérateur (21) comprend une première et une seconde gammes de fonctionnement (22, 23) avec une force sensiblement supérieure nécessaire pour fonctionner dans ladite seconde gamme (23), ladite seconde gamme correspondant à un couple de sortie dudit moteur (1) en admission naturelle et alimenté par ledit carburant secondaire, qui est sensiblement supérieur au couple développé par ledit moteur (1) lorsqu'il fonctionne dans ladite première gamme (22), la différence entre le couple de ladite seconde gamme et le couple de ladite première gamme étant utilisée pour l'accélération angulaire dudit dispositif de suralimentation (16, 19, 20).

2. Le système selon la revendication 1, dans lequel ledit dispositif de suralimentation (16, 19, 20) est agencé en tant que partie intégrante, mais amovible, dudit moteur (1) et est lubrifié par l'huile circulant dans ledit moteur (1).
